## Europäisches Patentamt
## European Patent Office
## Office européen des brevets

(19)

(11) Veröffentlichungsnummer: **0 321 938**
**A1**

(12) # EUROPÄISCHE PATENTANMELDUNG

(21) Anmeldenummer: **88121347.4**

(22) Anmeldetag: **21.12.88**

(51) Int. Cl.4: **B23K 26/00 , A46D 1/04 , A46D 9/00**

---

Ein Antrag gemäss Regel 88 EPÜ auf Hinzufügung von Zeichnungen liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **22.12.87 DE 3743468**

(43) Veröffentlichungstag der Anmeldung:
**28.06.89 Patentblatt 89/26**

(84) Benannte Vertragsstaaten:
**AT BE CH DE ES FR GB GR IT LI LU NL SE**

(71) Anmelder: **Blendax GmbH**
**Rheinallee 88**
**D-6500 Mainz(DE)**

(72) Erfinder: **Klein, Rolf, Dipl.-Ing.**
**Krugofen 52**
**D-5100 Aachen(DE)**
Erfinder: **Poprawe, Reinhart, Dr.**
**An der Schurzelter Mühle 97**
**D-5100 Aachen(DE)**
Erfinder: **Herziger, Gerd, Prof. Dr.**
**Lensbachstrasse 40a**
**D-5106 Roetgen-Rott(DE)**

---

(54) **Verfahren zum Abrunden der Borstenenden von Bürsten.**

(57) Um mit einfachen Mitteln ein gesteuertes Aufschmelzen der Borstenenden zu gewährleisten, wird derart verfahren, daß gepulste Laserstrahlung mit im Kilowattbereich liegender Leistung und im Mikrosekundenbereich liegender Impulsdauer verwendet wird.

EP 0 321 938 A1

Xerox Copy Centre

## Verfahren zum Abrunden der Borstenenden von Bürsten

Die Erfindung bezieht sich auf ein Verfahren zum Abrunden der Borstenenden von Bürsten, insbesondere Zahnbürsten, durch Einwirkung von Laserstrahlung.

Bei der Herstellung von Bürsten werden zunächst Borstenbündel in Löcher des Bürstenkopfs gestopft und darin verankert. Danach müssen die Borsten auf eine bestimmte Länge gebracht werden. Dies erfolgt im allgemeinen durch Abfräsen der Borstenenden, wobei die Borstenenden auch gestuft angeordnet werden können, so daß ihre Längen unterschiedlich sind. Nach dem Fräsen sind die Borstenenden jedoch scharfkantig und es ist daher bekannt, die scharfen Kanten zu brechen, d. h. die Borstenenden durch Beschleifen zu runden. Es bleibt jedoch eine rauhe Oberfläche im Bearbeitungsbereich der Borstenenden, die auch Schleiffahnen aufweisen können. Hinzu kommt, daß bei bestimmten Bürstenformen, z. B. V-Zahnbürsten, keine zufriedenstellende Reproduzierbarkeit der Kopfform nach dem Schleifen an den unterschiedlich langen Borsten bzw. bei geneigter Borstenstellung erreicht werden kann.

Aus der EP-A 60 952 ist es bekannt, Borstenenden thermoplastischer Kunststoffborsten mit Laserstrahlung abzurunden. Dabei werden die Borstenenden so aufgeschmolzen, daß sie die Form eines Wassertropfens annehmen. Damit dicht nebeneinanderstehende Borsten nicht miteinander verschmelzen, werden sie während ihrer Behandlung mit Laserstrahlung einer Saugwirkung ausgesetzt, die eine Streckung der Tropfen bewirken soll. Desweiteren ist es aus der DE-PS 35 33 533 bekannt, die Abrundung der Borstenenden in einem elektrostatischen Feld vorzunehmen, dessen Kräfte ebenfalls zu einer Streckung aufgeschmolzener Borstenenden führen sollen, um deren Verkleben zu verhindern.

Die bekannten Verfahren können nicht befriedigen, weil sie vergleichsweise aufwendig sind und das Abrunden der Borstenenden nicht genügend genau zu steuern erlauben.

Der Erfindung liegt daher die Aufgabe zugrunde, ein Verfahren der eingangs genannten Art so zu verbessern, daß es mit einfachen Mitteln ein gesteuertes Aufschmelzen der Borstenenden gewährleistet.

Die vorgenannte Aufgabe wird dadurch gelöst, daß gepulste Laserstrahlung mit im Kilowattbereich liegender Leistung und im Mikrosekundenbereich liegender Impulsdauer verwendet wird.

Der bevorzugte Bereich für die Pulsleistung liegt dabei zwischen etwa 10 Kilowatt und 20.000 Kilowatt, insbesondere zwischen etwa 1.000 KW und etwa 10.000 KW.

Die bevorzugte Pulsdauer beträgt etwa 0,5 bis etwa 3 Mikrosekunden, insbesondere etwa 0,6 Mikrosekunden bis etwa 1,2 Mikrosekunden.

Die Pulsanzahl liegt bei einer Pulsfolgefrequenz zwischen 1 und 200 Hz, insbesondere 5 bis 20 Hz, bei 1 bis 10.

Für die Erfindung ist von Bedeutung, daß die zum Abrunden der Borstenenden durch Aufschmelzen erforderliche Energie genügend genau gesteuert werden kann. Hierzu eignet sich insbesondere gepulste Laserstrahlung, wobei aber darüber hinaus von Bedeutung ist, daß die Impulsdauer vergleichsweise kurz gehalten werden kann. Kurze Impulsdauer ist von Bedeutung, um die Zersetzung des Kunststoffs zu vermeiden, die mit der Einwirkungsdauer zunehmend auftritt. Insbesondere diese Zersetzung führt durch eine Abströmung dampfförmiger Kunststoffanteile zu einer unerwünschten mechanischen Deformation des Aufschmelzbereichs des Borstenendes. Eine solche wird also dadurch vermieden, daß die zum Aufschmelzen erforderliche Energie mit relativ hoher Leistung, jedoch kurzer Pulsdauer in die Borstenenden eingestrahlt wird. Damit ist eine durch Zersetzungsvorgänge des Kunststoffs unbeeinflußte gesteuerte Formbildung der Borstenenden möglich.

Besonders vorteilhaft ist es, wenn Bürsten mit kegelartig spitzen Borstenenden verwendet werden. Dadurch wird ein Beginn des Aufschmelzens an der äußersten Borstenspitze erreicht, weil hier die Energieeinkopplung am größten und das der eingekoppelten Energie unterworfene Borstenvolumen am kleinsten ist. Von dieser äußersten Borstenspitze ausgehend läßt sich der weitere Aufschmelzvorgang durch einfache Bemessung der Impulsanzahl und der Impulswiederholungsfrequenz im gewünschten Sinne steuern.

Zweckmäßigerweise werden die Borstenenden stehend mit borstenparalleler Laserstrahlung bearbeitet, um die Energieeinkopplung in die Borstenspitze bzw. in die Bostenenden gleichmäßig zu gestalten.

Um mit Sicherheit zu verhindern, daß einander benachbarte, insbesondere dicht stehende Borsten miteinander verkleben, wird mit der gepulsten Laserstrahlung ein den Außendurchmesser der Borste nicht übersteigender Aufschmelzkegel des Borstenendes erzeugt.

Die Laserstrahlung wird der borstensenkrechten Projektionsfläche aller Borstenenden entsprechend geformt, um die Einstrahlung auf den Borsten aufweisenden Bereich der Bürste zu beschränken und Laserstrahlung von einer Transportvorrichtung der Bürste fernzuhalten.

Jede Bürste wird während der Einwirkung der Laserstrahlung relativ bewegungsfrei zu letzterer angeordnet, was den besonderen Vorteil hat, daß der Laser fest justiert und die Laserstrahlung lediglich einmal ausgerichtet zu werden braucht, während der Bürstentransport in herkömmlicher Weise mit einfachen Mitteln schrittweise bewerkstelligt werden kann.

Es wird ein TEACO$_2$-Laser verwendet, mit dem die gewünschten kurzen Bearbeitungsimpulse erzielt werden können.

Die Borsten werden vor ihrer mit Laserstrahlung erfolgenden Bearbeitung vorgetrocknet, um Einflüsse von Feuchtigkeit bei der Abrundung zu vermeiden, beispielsweise die Entstehung einer Wasserdampfphase, die zur Aufrauhung der Oberfläche des Borsenendes oder gar zu einer Beeinflussung der Formbildung des Borstenendes beim Aufschmelzvorgang führen könnte.

Die Erfindung wird anhand einer Zeichnung erläutert. Es zeigt:

Fig. 1 eine Vorrichtung zum Abrunden von Borstenenden mit Laserstrahlung in schematischer perspektivischer Darstellung.

Fig. 2 das Detail A der Fig. 1 in Seitenansicht, und

Fig. 3 a bis 3 c den Aufschmelzvorgang im Verlauf einer Bearbeitung eines Borstenendes mit Laserstrahlung.

Fig. 1 zeigt einen Laser 1, dessen Laserstrahl 2 von einem Umlenkspiegel 3 auf die Borsten 9 einer Bürste 4 gelenkt ist. Die Laserstrahlung des Laserstrahls 2 ist gepulst, wobei die Länge und die Anzahl der Impulse und die Frequenz der Pulsfolge in herkömmlicher Weise mit dem Laser 1 steuerbar sind.

Der Umlenkspiegel 3 konzentriert die Laserstrahlung auf denjenigen Bereich, in dem Borstenenden 6 der Bürste 4 vorhanden sind. Im dargestellten Beispiel sind alle Borstenenden 6 in einer Ebene 8 angeordnet, wobei die von den Borstenenden 6 eingenommene Fläche etwa rechteckförmig ist. Der Umlenkspiegel 3 zeigt beispielsweise, wie der Laserstrahl 2 derart geformt wird, daß er im Bereich der Bürste 4 lediglich die in der Darstellungsebene der Zeichnung gelegene Breite hat. Für diese Strahlformung dienen die Facetten 3' bis 3''', welche den auf sie entfallenden Strahlungsanteil des Laserstrahls 2 entsprechend ihren dargestellten Grenzstrahlen jeweils auf die maßgebliche Borstenfeldbreite b reflektieren. Dabei ist die Anordnung des Umlenkspiegels 3 so getroffen, daß die Laserstrahlung im wesentlichen borstenparallel einfällt, wie aus den Fig. 3 a, b ersichtlich ist.

Die Bürste 4 ist zur Bestrahlung ihrer Borstenenden 6 auf ihrem Rücken 11 liegend angeordnet, und zwar auf einer Transportvorrichtung 5, die mehrere Bürsten 4 aufeinanderfolgend in den Bereich des Laserstrahls 2 transportiert. Die Transportvorrichtung 5 besteht aus einem Förderband 12, auf dessen oberem Trum 13 mehrere Bürsten 4 in Abstand voneinander angeordnet sind, so daß sie bei einer Bewegung des Förderbands 12 entsprechend den Pfeilen 14 transportiert werden. Die Förderung erfolgt so, daß die Transportvorrichtung 5 bw. die Bewegung des Förderbands 12 dann angehalten wird, wenn eine nicht dargestellte Meßvorrichtung eine lagerichtige Zuordnung einer Bürste 4 zum Laserstrahl 3 erkennt, also derart, daß dessen Strahlungsquerschnitt in vorbestimmter Weise die borstenparallele Projektionsfläche aller Borstenenden 6 abdeckt.

Nach vorbestimmter Anordnung einer Bürste 4 erfolgt die Abrundung der Borstenenden 6 durch deren teilweises Aufschmelzen, wobei Relativbewegungen zwischen der Bürste 4 und dem Laserstrahl 2 während der Bearbeitung nicht auftreten.

Nach der Bearbeitung der Borstenenden werden die Bürsten der weiteren Verarbeitung zugeführt, z. B. einer Verpackung.

Der schrittweise Transport der Bürsten 4 durch die Transportvorrichtung 5 erfolgt in Abstimmung auf die Tätigkeit des Lasers 1, also unter Berücksichtigung der Taktfolge des Impulsbetriebs. Es ist auch möglich, den Laser 1 in Abhängigkeit von dem durch die Transportvorrichtung 5 erfolgten Transport der Bürsten 4 ein und auszuschalten.

Gemäß Fig. 3a ist die Borste 7 zugespitzt, hat also ein nach Art eines Kegels zugespitztes Borstenende 6. Ein derartiger spitzer Vorschliff eines Borstenendes 6 bzw. aller Borstenenden 6 einer Bürste 4 wird dadurch erreicht, daß diese mit den Borstenenden auf eine Schleifscheibe gedrückt wird, die schwingschleiferähnliche Bewegungen ausführt, so daß sich bei entsprechender Abstimmung des Drucks auf die Bürste und des Radius der Schleifbewegung die gewünschte Zuspitzung der Borstenenden ergibt.

Zu Beginn der Bearbeitung der Borstenenden 6 mittels Laserstrahlung trifft diese gemäß Fig. 3a borstenparallel auf und bringt zunächst die äußerste Spitze des Borstenendes 6 zum schmelzen, wobei ein Schmelzkegel 9 entsteht. Dieser hat die schematisch dargestellte Ausdehnung nach innen, weil die Energieeinkupplung an der Spitze am größten ist, da an den tiefer gelegenen Außenflächen des Borstenendes 6 eine stärkere, energieabführende Reflexion auftritt. Die Einkopplung der Energie über den Schmelzkegel 9 ist derart gut, daß das weitere Aufschmelzen des Borstenendes 6 gemäß Fig. 3b im wesentlichen von diesem Schmelzkegel 9 aus erfolgt. Das deuten die starken Pfeile 16 an. Die Bearbeitung der Borstenenden 6 erfolgt mit einer Vielzahl von Laserimpulsen, bis der Aufschmelzkegel 9 die aus Fig. 3c ersichtliche Form hat, bei der das Borstenende 6 in vorbestimmter Weise abgerundet ist. Durch geeignete Bemessung der Anzahl der Laserimpulse und/oder der Impulsdauer und/oder der Impulsabstände kann erreicht werden, daß ein den Außendurchmesser B der Borste 7 nicht übersteigender Aufschmelzkegel 9 erzeugt wird, eine Gefahr des Verklebens benachbarter Borsten also auch bei dichtstehenden Borsten 7 nicht auftritt.

Damit die Ausbildung des Aufschmelzkegels 9 bei der Bearbeitung der Borstenenden 6 mit Laserstrahlung nicht durch Feuchtigkeit beeinträchtigt wird, die infolge der hygroskopischen Wirkung des Kunststoffs vorhanden ist, werden die Wasseranteile des Materials durch Vortrocknung der Borsten 7 beseitigt. Das gilt beispielsweise für einen Polyamid-Werkstoff für Borsten, z. B. PA 612.

Als Laser 1 wird beispielsweise ein TEACO$_2$-Laser eingesetzt, also ein quer (transverse) angeregter (exited) Atmosphärendruck (atmospheric pressure) Kohlendioxyd-Laser, der sich durch Mikrosekunden-Erregung auszeichnet, also entsprechend kurzdauernde Impulse von z. B. kleiner als eine Mikrosekunde erzeugen kann. Der Leistungsbereich derartiger Laser erstreckt sich in den Kilowattbereich, so daß die Leistung dieses Lasers beim Abrunden während höchstens einer Mikrosekunde z. B. größer als 10 Kilowatt ist. Mit einem solchen Verfahren haben sich sehr zufriedenstellende Abrundungen der Borstenenden 6 ergeben.

**Ansprüche**

1. Verfahren zum Abrunden der Borstenenden von Bürsten durch Einwirkung von Laserstrahlung, **dadurch gekennzeichnet,** daß gepulste Laserstrahlung mit im Kilowattbereich liegender Leistung und im Mikrosekundenbereich liegender Impulsdauer verwendet wird.

2. Verfahren nach Anspruch 1, **dadurch gekennzeichnet,** daß Bürsten (4) mit kegelartig spitzen Borstenenden (6) verwendet werden.

3. Verfahren nach Anspruch 1 oder 2, **dadurch gekennzeichnet,** daß die Borstenenden (6) stehend mit im wesentlichen borstenparalleler Laserstrahlung bearbeitet werden.

4. Verfahren nach einem oder mehreren der Ansprüche 1 bis 3, **dadurch gekennzeichnet,** daß mit der gepulsten Laserstrahlung ein den Außendurchmesser (B) der Borste (7) nicht übersteigender Aufschmelzkegel (9) des Borstenendes (6) erzeugt wird.

5. Verfahren nach einem oder mehreren der Ansprüche 1 bis 4, **dadurch gekennzeichnet,** daß die Laserstrahlung der borstenparallelen Projektionsfläche aller Borstenenden (6) entsprechend geformt wird.

6. Verfahren nach einem oder mehreren der Ansprüche 1 bis 5, **dadurch gekennzeichnet,** daß jede Bürste (4) während der Einwirkung der Laserstrahlung relativbewegungsfrei zu letzterer angeordnet wird.

7. Verfahren nach einem oder mehreren der Ansprüche 1 bis 6, **dadurch gekennzeichnet,** daß ein TEACO$_2$-Laser verwendet wird.

8. Verfahren nach einem oder mehreren der Ansprüche 1 bis 7, **dadurch gekennzeichnet,** daß die Borsten (7) vor ihrer mit Laserstrahlung erfolgenden Bearbeitung vorgetrocknet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A,D | EP-A-060592 (E.Y.G.J. D'ARGEMBEAU) <br> * Seite 2, Zeile 14 - Seite 6, Zeile 8; Figur 1 * <br> --- | 1, 3, 7 | B23K26/00 <br> A46D1/04 <br> A46D9/00 |
| A,D | DE-C-3533533 (BLENDAX-WERKE R.SCHNEIDER GMBH & CO) <br> * das ganze Dokument * <br> --- | 1, 7 | |
| A | EP-A-038297 (LASAG AG) <br> * Seite 12, Zeile 16; Anspruch 15; Figuren 2, 7 * <br> ----- | 1, 4, 7 | |

RECHERCHIERTE
SACHGEBIETE (Int. Cl.4 )

B23K
A46D

Der vorliegende Recherchenbericht wurde für alle Patentansprüche erstellt

| Recherchenort | Abschlußdatum der Recherche | Prüfer |
|---|---|---|
| DEN HAAG | 30 MAERZ 1989 | ARAN D.D. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)